# EUROPEAN PATENT APPLICATION

(11) **EP 4 625 412 A1**
(43) Date of publication of application: **01.10.2025**
(21) Application number: 24166877.1
(22) Date of filing: 27.03.2024
(51) Int. Cl.: G10L 21/0364, G10L 25/30, H04R 25/00, G10L 21/003, G10L 21/013

(54) **METHOD FOR TRAINING A SPEECH ENHANCEMENT NEURAL NETWORK, SPEECH ENHANCEMENT NEURAL NETWORK AND HEARING DEVICE THEREWITH**

(71) Applicant: Sonova AG, 8712 Stäfa (CH)
(72) Inventor: Sattler, Felix, 10969 Berlin (DE); Merboldt, André, 10969 Berlin (DE); Ochsner, Gregor, 8712 Stäfa (CH); Kroedel, Sebastian, 8712 Stäfa (CH); Hofbauer, Markus, 8712 Stäfa (CH); Santelli, Claudio, 8712 Stäfa (CH)
(74) Representative: Rau, Schneck & Hübner Patentanwälte Rechtsanwälte PartGmbB

(57) **Abstract**

A method for training a speech enhancement neural network (18) for being executed on a hearing device comprises the steps: providing a speech enhancement neural network (18), providing a speech style transfer algorithm for converting speech samples with a first speech style into speech samples with a second speech style, obtaining at least one training data set and applying supervised training on the speech enhancement neural network (18). The speech enhancement neural network (18) has a network audio input (28) for receiving an input audio signal, one or more network layers (29) for predicting an enhanced audio signal and/or a filter mask for filtering the input audio signal, and a network output (30) for outputting the enhanced audio signal and/or the filter mask. The at least one training data set comprises a training input audio signal (TI) comprising a speech sample and a target speech sample (TSP), which is used as training target and is obtained by applying the speech style transfer algorithm on the respective speech sample.

## Description

The disclosed technology generally relates to audio signal processing on a hearing device using a neural network for enhancing speech. More specifically, the disclosed technology relates to a method for training a speech enhancement neural network for being executed on a hearing device and a speech enhancement neural network for a hearing device. The disclosed technology further concerns a hearing device, in particular a hearing aid, with such a speech enhancement neural network. The disclosed technology further concerns a method for audio signal processing on a hearing device.

Hearing devices are used to improve the hearing experience of a hearing device user, in particular with regard to intelligibility of speech, which is particularly relevant for hearing impaired users. An exemplary speech enhancement algorithm for reducing noise is described in US 10,897,675 B1.

Known speech enhancement algorithms, e.g. in the form of neural networks, aim to remove noise sources from a mixture of speech signals with noise, thereby preserving the original speech with reduced or no noise. While removing the background noise is essential for speech understanding, speech intelligibility can still be heavily impaired due to lack of clarity in the speech itself. Possible sources for lack of clarity include speech impediments, unclear pronunciation, such as mumbling, reverberant speech and/or spectral content, that lies within a region of severe hearing loss of the hearing device user. People suffering from hearing loss are particularly effected by such lack of clarity in speech. Noise removal cannot cope with such lack of clarity.

There are speech style transfer algorithms, which can reproduce speech having a first speech style in a different, second speech style, thereby changing the speech style of the speech, without altering the content. Capable speech style transfer algorithms are in particular speech style transfer neural networks, such as Voicebox (cf. M. Le et al. "Voicebox: Text-guided multilingual universal speech generation at scale", arxiv.2306.15687v2, 19.10.2023) or AutoVC (cf. K. Qian et al. "AutoVC: Zero-shot voice style transfer with only autoencoder loss", arxiv. 1905.05879v2, 06.06.2019). Such speech style transfer algorithms require high computational power, excluding their execution on mobile devices, in particular on hearing devices. Moreover, such speech style transfer algorithms require long processing times, excluding low latency, in particular real-time processing, which is, however, essential for processing audio signals on a hearing device.

It is an object of the disclosed technology to improve audio signal processing on a hearing device so that clarity of speech is improved, in particular to provide speech style capabilities to audio signal processing on a hearing device.

This object is achieved by a method for training a speech enhancement neural network to be executed on a hearing device according to claim 1. This object is also achieved by a speech enhancement neural network of claim 6 and a hearing device equipped therewith according to claim 9. The object is further achieved by a method of audio signal processing on a hearing device according to claim 11.

The method for training a speech enhancement neural network for being executed on a hearing device comprises the steps:
- providing a speech enhancement neural network having a network audio input for receiving an input audio signal, one or more network layers for predicting, based on the input audio signal, an enhanced audio signal and/or a filter mask for filtering the input audio signal, and a network output for outputting the enhanced audio signal and/or the filter mask,
- providing a speech style transfer algorithm, in particular a speech style transfer neural network, for converting speech samples with a first speech style into speech samples with a second speech style,
- obtaining at least one training data set, the training data set comprising a training input audio signal and a target speech sample, wherein the training input audio signal comprises a speech sample, and wherein the target speech sample is obtained by applying the speech style transfer algorithm on the respective speech sample, and
- applying supervised training on the speech enhancement neural network using the at least one training data set.

The method for training the speech enhancement neural network allows to incorporate speech style transfer capabilities in the speech enhancement neural network by using the output of a speech style transfer algorithm as target speech sample.. For example, the target speech sample may be compared to a training output predicted by the speech enhancement neural network based on the input audio signal. At least parts of the speech style transfer capabilities of the speech style transfer algorithm are implemented in the speech enhancement neural network by way of knowledge distillation. This way, the speech enhancement neural network is trained to apply a speech style transfer, without requiring the complexity of the speech style transfer algorithm. The speech enhancement neural network can be executed on a hearing device for using speech style transfer in the audio signal processing thereon.

During training, the target speech sample can in particular be used as training target.

In particular, the target speech sample may be used in a loss function for calculating training loss. Suitable loss functions include, but are not limited to, a reconstruction loss and/or a style consistency loss. A reconstruction loss may penalize the distance between a training output and the target speech sample, e.g. cIRM, SDR, ESTOI and/or deep feature losses. A reconstruction loss may penalize the distance between the target output and the target speech sample in a style space, in particular in a style embedding space.

A hearing device in the context of the disclosed technology may in particular include hearing aids, headphones, earphones, assistive listening devices, or any combination thereof. The hearing device may include both prescription devices and non-prescription devices configured to be worn on or near a human head. As an example of a hearing device, a hearing aid is a device that provides amplification, attenuation and/or frequency modification of audio signals to compensate for hearing deficiency, hearing difficulty or hearing loss. Some examples of hearing aids include behind-the-ear (BTE) hearing aids, receiver-in-the-canal (MC) hearing aids, in-the-ear (ITE) hearing aids, completely-in-the-canal (CIC) hearing aids, invisible-in-the-canal (IIC) hearing aids and/or cochlea implants, which may include a device part and an implant part. Particularly preferable, the hearing device of the disclosed technology is a hearing aid, a hearable and/or a hearing implant.

The hearing device may be part of a hearing device system including one or more hearing devices, in particular hearing aids. In particular, the hearing device system may comprise two hearing devices, in particular hearing aids, associated with the left and right ear of the hearing device user, respectively. The hearing device system may further comprise one or more peripheral devices, such as a mobile compute device, a smartphone, a smartwatch and/or a wireless microphone. Different devices of the hearing device system may be connected with each other, in particular via wireless data connection. Hearing device systems comprising two hearing devices, in particular two hearing aids, may preferably be adapted for binaural audio signal processing.

A neural network in the sense of the disclosed technology is an artificial neural network.

A speech enhancement neural network in the sense of the disclosed technology is a neural network which is adapted to be executed on a hearing device during audio signal processing for improving clarity, in particular intelligibility, of speech contained in audio signals to be processed.

A speech style transfer algorithm is an algorithm which allows to convert speech samples having a first speech style into speech samples with a second speech style. Speech style transfer neural networks allow to reproduce the content of the speech sample in a different speech style, e.g. with a different voice, tonality, speech rhythm or the like. In particular, vocal characteristics and/or vocal qualities of the speech sample may be altered, in particular improved with respect to clarity and/or intelligibility. Speech style transfer may also be referred to as voice conversion.

The speech enhancement neural network may be a generative neural network, generating the enhance audio signal. It is also possible that the speech enhancement neural network determines a filter mask with which the input audio signal is filtered and the filtered audio signal is outputted as enhanced audio signal. It is also possible that the speech enhancement neural network determines a filter mask, which is outputted via a network output. The filter mask can then be used to filter the input audio signal during further audio signal processing steps on the hearing device.

In case that the speech enhancement neural network determines a filter mask, the training input audio signal may be filtered by the filter mask to obtain a training output audio signal, which may be compared with the target speech sample.

The speech style transfer algorithm may preferably be a speech style transfer neural network. Speech style transfer neural networks have been shown in recent years to produce speech style transfers with sufficient quality, in particular without introducing further artifacts, which may impair the clarity and intelligibility of speech samples. The speech style transfer algorithm, in particular the speech style transfer neural network, may be a complex algorithm having high computational needs, in particular excluding its execution on a hearing device system, in particular on one or more hearing devices.

Any known speech style transfer algorithm, in particular any known speech style transfer neural network, may be used to obtain the target speech sample from the speech sample. For example, the above-referenced speech style transfer neural networks Voicebox and/or AutoVC may be used. Preferably, however, the speech style transfer algorithm, in particular the speech style transfer neural network, may be specifically adapted for training a speech enhancement neural network to be used in audio signal processing on a hearing device. Possible, non-limiting examples of such an adaption of the speech style transfer algorithm, in particular the speech style transfer neural network, are described below.

Provision of the speech style transfer algorithm, in particular the speech style transfer neural network, may comprise setting up the speech style transfer algorithm, in particular training a speech style transfer neural network.

According to a preferred aspect of the disclosed technology, the training input audio signal comprises a mixture of the respective speech sample with noise. Since the training input audio signal comprises noise and the training target is based on a speech style transfer of the speech sample without noise, the speech enhancement neural network is trained for noise reduction, in particular noise removal, and speech style transfer. Noise reduction and speech style transfer can be combined in a particularly efficient way.

The training input audio signal may be obtained by providing a speech sample and combining the speech sample with noise from one or more noise sources and/or noise samples. This way, the clean speech sample can be provided to the speech style transfer algorithm to obtain the target speech sample. It is also possible to provide a noisy speech sample, which inherently comprises a combination of speech and noise and which can be directly used as the training input audio signal. In this case, the noisy speech sample can be denoised to obtain the speech sample, which is inputted in the speech style transfer algorithm.

According to a preferred aspect of the disclosed technology, a style shift parameter is provided to the speech style transfer algorithm and the speech style transfer algorithm determines the second speech style relative to the first speech style in accordance with the style shift parameter.

Instead of performing speech style transfer to a fixed or predefined target speech style, e.g. by providing a second speech sample with the target speech style, the speech style transfer algorithm allows for a relative shift in speech style based on the speech style of the provided speech sample. In other words, the speech style of the output of the speech style transfer algorithm is not mimicking the voice of a specific speaker, but results in a target speech style which determined relative to the speech style of the speech sample. This way, speech samples of different voices are transferred into speech samples of respectively different, converted voices. Different speakers can still be distinguished, as they are reproduced with different target speech styles. This is particularly suitable for audio signal processing on hearing devices, as a fixed target speech style or a plurality of fixed target speech styles may alienate the hearing device user, to which voices of different persons would be reproduced with the same speech style.

The style shift parameter may, in particular, set a kind of speech style transfer, e.g. towards higher or lower frequencies, towards a specific tonality, towards a specific pronunciation or the like. This may be referred to as setting a style shift direction. Additionally or alternatively, the style shift parameter may set a strength in the speech style transfer, e.g. how strong the shift to lower or higher frequencies or to a specific tonality is. This may be referred to as setting a style shift strength. Preferably, the style shift parameter may comprise a style shift direction and/or a style shift strength. Particularly preferable, the style shift direction and the style shift strength may be adjusted independently of each other.

The style shift parameter, in particular the style shift direction and/or the style shift strength, may be fixed. This way, the speech style transfer is always performed in a specific way, e.g. by shifting the speech style of the speech sample to higher or lower frequencies or the like. The style shift parameter may, for example, be chosen in a way, which is particularly suitable for enhancing the clarity of speech for a hearing device user.

Particularly preferable, the style shift parameter, in particular the style shift direction and/or the style shift strength, may be variable. This way, different speech style transfers can be considered during training, increasing the flexibility and capability of the style shift transfer of the trained speech enhancement neural network. For example, the speech enhancement neural network may comprise a network parameter input for receiving the style shift parameter, in particular a style shift direction and/or a style shift strength. A network parameter input allows for particularly flexible setting of the speech style transfer to be applied.

According to a preferred aspect of the disclosed technology, obtaining the target speech sample using the speech style transfer algorithm comprises
- obtaining sample content information on the speech sample,
- determining a sample style embedding of the speech sample within a style embedding space,
- determining a target style embedding by shifting the sample style embedding by a style shift parameter, and
- generating the target speech sample based on the sample content information and the target style embedding.

Using a style embedding space is particularly suitable for a relative shift in the speech style based on the provided speech sample. An embedding space, which may also be referred to as a latent space, may be a multidimensional vector space, in which different speech styles are identified by respective embedding vectors (sample style embeddings). The style shift parameter, which preferably may be provided to the speech style transfer algorithm via a style transfer input, can be defined as a vector in the style embedding space. For performing the style shift, the style shift parameter may be added to the sample style embedding to obtain the target style embedding.

The style shift direction may, e.g. be a unit vector in the style embedding space. The style shift strength may be a scalar quantity, which determines the norm of the resulting style shift parameter vector in the style embedding space. In other words, the style shift parameter may be a vector, obtained by multiplying the scalar style shift strength with the style shift direction unit vector.

The determination of a sample style embedding may in particular be performed by a sample encoder block of the speech style transfer algorithm, in particular of a speech style transfer neural network.

The sample content information may be obtained by processing the speech sample in the speech style transfer algorithm, e.g. using a content encoder block. For example, the speech style transfer algorithm may determine a sample content embedding in a content embedding space. The speech style transfer algorithm may also determine a transcript of the speech sample to be used as content information. It is also possible that the content information, in particular a sample content embedding and/or a transcript, are provided to the speech style transfer algorithm, e.g. via a separate input.

According to a preferred aspect of the disclosed technology, the speech enhancement neural network comprises a network parameter input for the style shift parameter, in particular for a style shift direction and/or a style shift strength, and training is performed using a plurality of training data sets comprising different style shift parameters. Adding a network parameter input for a style shift parameter allows to enhance the flexibility in the speech style transfer applied by the speech enhancement neural network. In particular, different speech style transfers can be trained and executed in inference mode. Advantageously, this allows to change the speech style transfer in inference mode, so that the speech style transfer can be adjusted, in particular in dependence of preferences and/or a hearing deficiency, in particular a hearing loss, of a hearing device user, in particular a hearing aid user.

The network parameter input may be configured to receive the style shift direction and/or the style shift strength. For example, the network parameter input may be configured to receive the style shift strength, so that the strength of the speech style transfer can be modified, e.g. for a predefined style shift direction. Preferably, the network parameter input is configured to receive and set the style shift direction and the style shift strength independent of each other. This enhances the flexibility in the speech style transfer, which can be performed by the speech enhancement neural network.

Preferably, during training, the style shift parameter, in particular the style shift direction and/or the style shift strength, are sampled according to a distribution function. The distribution function can preferably be chosen to reflect particularly useful style shift parameters, in particular style shift directions and/or style shift weights.

The speech enhancement neural network of the disclosed technology is configured for being executed on a hearing device. The speech enhancement neural network comprises an audio input for receiving an input audio signal, one or more neural network layers for predicting, based on the input audio signal, an enhanced audio signal and/or a filter mask for filtering the input audio signal, and a network for outputting the enhanced audio signal and/or the filter mask. The speech enhancement neural network is configured to apply a speech style transfer on speech contained in the input audio signal. The enhanced audio signal may comprise converted speech. The speech style transfer can also be incorporated in a predicted filter mask, wherein filtering the input audio signal results in the speech style transfer being applied on speech signals contained in the input audio signal.

The speech enhancement neural network is preferably trained according to the above-specified method for training a speech enhancement neural network. Training of the speech enhancement neural network may, in particular, involve one or more of the above-described preferred aspects of the training method. The speech enhancement neural network may preferably comprise one or more of the features described above with regard to the training method for the speech enhancement neural network.

According to a preferred aspect of the disclosed technology, the speech enhancement neural network comprises a network parameter input for receiving a style shift parameter, in particular a style shift direction and/or a style shift strength, for determining a speech style transfer to be applied to the input audio signal. The network parameter input may in particular be configured to receive the style shift direction and style shift strength independent of each other. The style shift parameter, in particular the style shift direction and/or the style shift strength, can in particular be adjusted based on preferences and/or the hearing deficiency, in particular the hearing loss, of a hearing device user.

According to a preferred aspect of the disclosed technology, the speech enhancement neural network is configured to process the input audio signal in real-time. In particular, when executed on a hearing device, the speech enhancement neural network processes the input audio signal in real-time, thereby performing speech style transfer on speech contained in the input audio signal. Processing in real-time in particular means that execution of the speech enhancement neural network causes a latency of shorter than 25 ms, preferably shorter than 20 ms, between signal input and signal output.

The disclosed technology may in particular relate to a computer program product for a hearing device, the computer program product comprising instructions which, when the program is executed by the hearing device, cause the hearing device to execute the speech enhancement neural network. In other words, the speech enhancement neural network may be a computer program product for a hearing device.

The disclosed technology may in particular relate to a computer-readable medium, comprising the above-specified speech enhancement neural network. The computer-readable medium may, in particular, comprise instructions, which, when executed by a hearing device, cause the hearing device to execute the speech enhancement neural network.

A hearing device in accordance with the disclosed technology comprises an audio input unit for obtaining an input audio signal, an audio processing unit for processing the input audio signal for obtaining an output audio signal, and an audio output unit for outputting an output audio signal. The audio processing unit comprises a speech enhancement neural network to be applied on the input audio signal for obtaining the output audio signal. The speech enhancement neural network is configured as described above, it is, preferably, trained in accordance with the method for training a speech enhancement neural network described above. The hearing device preferably is a hearing aid, a hearing implant and/or a hearable.

Using the speech enhancement neural network, a speech style of speech contained in the input audio signal is converted. Speech contained in the input audio signal is represented in the output audio signal as different, modified speech style. Preferably, the speech enhancement neural network is configured to remove noise from the input audio signal and to change the speech style of speech contained in the input audio signal. Particularly preferable, the speech enhancement neural network is configured to process the input audio signal in real-time, when executed on the hearing device.

The output audio signal may at least partially be based on an output of the speech enhancement neural network. For example, the speech enhancement neural network may output an enhanced audio signal. The enhanced audio signal may be directly used as output audio signal. It is also possible that the enhanced audio signal outputted by the speech enhancement neural network undergoes further processing to obtain the output audio signal. Additionally or alternatively, to the enhanced audio signal, the speech enhancement neural network may predict an output a filter mask. The filter mask may be applied to the input audio signal to obtain the output audio signal and/or an enhanced audio signal, which undergoes further processing to obtain the output audio signal.

According to a preferred aspect of the disclosed technology, the speech enhancement neural network is configured to execute speech style transfer based a style shift parameter, in particular a style shift direction and/or a style shift strength. Preferably, the style shift parameter, in particular the style shift direction and/or style shift strength, is adjusted based on preferences and/or a hearing deficiency, in particular a hearing loss, of the hearing device user, in particular a hearing aid user.

Preferably, the hearing device comprises a parameter interface for receiving the style shift parameter, in particular the style shift direction and/or the style shift strength, to be used as a parameter input for the speech enhancement neural network. Using the parameter interface, the hearing device user and/or a hearing care professional can adjust the speech style transfer to be applied on the input audio signal by the speech enhancement neural network. For example, the parameter interface may be configured for direct input of the style shift parameter, in particular the style shift direction and/or the style shift strength, on the hearing device, e.g. by haptic interaction with a button and/or a touch sensor or the like. It is also possible to use voice control and/or gesture control to adjust the style shift parameter, in particular the style shift strength and/or the style shift direction.

Preferably, the parameter interface may be provided by a data interface for receiving data from a peripheral and/or a remote device, which may be connectable to the hearing device. For example, during hearing device fitting, the hearing device may be connected to a device of a hearing care professional, via which the style shift parameter may be adjusted. Particularly preferable, the data interface may connect to a peripheral device of a hearing device user, which is connectable to the hearing device. For example, a peripheral device of a hearing device user, in particular in form of a mobile compute device, a smartphone and/or a smartwatch, can comprise a hearing device system software, e.g. in form of a app, through which the hearing device user can interact with the hearing device, in particular for steering audio signal processing on the hearing device. The peripheral device may, thus, provide a user interface for inputting the style shift parameter, in particular the style shift direction and/or the style shift strength.

In particular, the hearing device may be part of a hearing device system comprising one or more hearing devices and, optionally, one or more peripheral devices. The peripheral device may allow the user, e.g. by way of a hearing device system software, to interact with the hearing device, to adjust audio signal processing on the hearing device and/or to input a style shift parameter. For example, a style shift parameter may be chosen from a selection of different style shift parameters presented to the hearing device user via a user interface of the peripheral device, e.g. via a touchscreen of a smartphone and/or a smartwatch.

A method for audio signal processing on the hearing device comprises the steps:
- obtaining an input audio signal via the audio input unit,
- determining an output audio signal based on the input audio signal using the audio processing unit, wherein determining the output audio signal comprises applying the speech enhancement neural network on the input audio signal, and
- outputting the output audio signal via the audio output unit.

According to a preferred aspect of the method of audio signal processing, a style shift parameter, in particular a style shift direction and/or a style shift strength, is provided to the speech enhancement neural network for setting, in particular adjusting and/or modifying, a change in speech style applied to the input audio signal. This allows for a flexible audio signal processing, in particular taking into account the preferences and/or the hearing deficiency, in particular a hearing loss, of a hearing device user. Advantageously, the audio signal processing, in particular the speech style transfer, can be adapted to the instant hearing situation. For example, the user may choose to adjust the style shift strength, in order to balance between clarity and naturalness of speech contained in the output audio signal.

According to a preferred aspect of the method of audio signal processing, providing the style shift parameter comprises choosing at least one style shift parameter of a set of predefined style shift parameters. For example, a selection of style shift parameters, in particular style shift directions, may be presented to a hearing device user and/or a hearing care professional, for selecting one or more of the style shift parameters. This way, different kinds of speech style transfer can be easily implemented. For example, the predefined style shift parameters can be particularly adapted for different hearing situations and/or different kinds of hearing deficiency, in particular different kinds of hearing loss, of a hearing device user, e.g. a hearing aid user. Predefined style shift parameters may, additionally or alternatively, be adapted for different changes in speech style, which may be particularly relevant for a hearing impaired person. Exemplary style shift parameters may be different style shift modes, such as "remove stuttering", "raise vocal effort" and/or "lower pitch".

Selectable style shift parameters may be presented to a hearing device user via a user interface, e.g. of the peripheral device of a hearing device system. For example, a hearing device system software may comprise a style shift mode selection interface for selecting one or more of the predefined style shift parameters.

According to a preferred aspect of the method of audio signal processing, providing the style shift parameter comprises adjusting the style shift direction and/or a style shift strength, during a hearing device fitting session, in particular by A/B testing. The style shift parameter, in particular a style shift direction and/or a style shift strength, may be adjusted by a hearing care professional, in particular in accordance with preferences and/or a hearing deficiency, e.g. a hearing loss, of a hearing device user. For example, the hearing care professional may provide different alternatives of stylized speech to a hearing device user, who may then choose the respective preferred speech style.

Setting the style shift direction in a hearing device fitting session is particularly advantageous. Setting the style shift direction may be particularly complex because there are many different ways how the speech style may be changed, so that an appropriate setting may be difficult to be found by the hearing device user. Having set the style shift direction in a hearing device fitting session, the hearing device user may, for example, adjust the style shift strength to his or her preferences and/or needs. For example, the hearing device user may discreetly or continuously increase or decrease the style shift strength, for example by a respective slider presented on a user interface by a hearing device system software.

According to a preferred aspect of the method of audio signal processing, providing the style shift parameter comprises adjusting the style shift strength based on a style shift direction adjusted in accordance with preferences and/or a hearing deficiency, in particular a hearing loss, of the hearing device user. For example, the style shift direction may have been adjusted in a hearing device fitting session by a hearing care professional. The hearing device user can then flexibly adjust the style shift strength, in particular in accordance with the instant hearing situation.

Further details, features and advantages of the disclosed technology are obtained from the description of exemplary embodiments with reference to the figures, in which:
- Fig. 1: shows a schematic depiction of an exemplary hearing device system comprising two hearing devices,
- Fig. 2: shows a schematic depiction of an exemplary hearing device, which may be part of the hearing device system of Fig. 1,
- Fig. 3A: shows a schematic depiction of a speech style transfer neural network for converting speech samples with a first speech style into speech samples with a second speech style,
- Fig. 3B: shows a schematic depiction of a style embedding space of the speech style transfer neural network, wherein a sample style embedding of the speech sample is shifted by a style shift parameter to a target style embedding,
- Fig. 4: shows a schematic depiction of a training routine for a speech enhancement neural network for a hearing device,
- Fig. 5: schematically shows an exemplary audio signal processing on a hearing device comprising a speech enhancement neural network trained in accordance with Fig. 4,
- Fig. 6: schematically depicts the provision of a style shift parameter for determining a change in speech style applied by a speech enhancement neural network of a hearing device,
- Fig. 7: shows exemplarily another embodiment of audio signal processing on a hearing device using a speech enhancement neural network, and
- Fig. 8: shows exemplarily another embodiment of audio signal processing on a hearing device having a speech enhancement neural network.

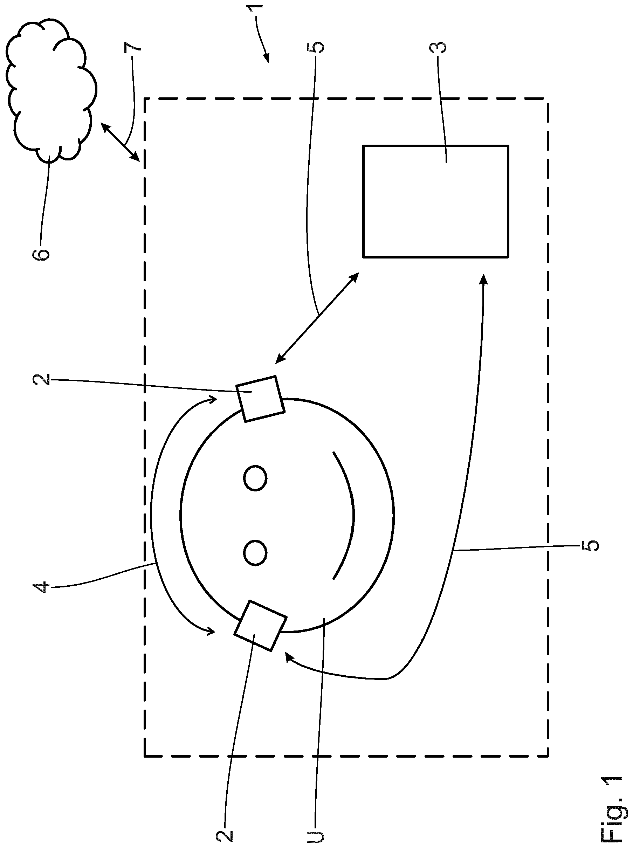

Fig. 1 schematically shows a hearing device system 1 associated with a hearing device user U. The hearing device system 1 comprises two hearing devices 2. The hearing devices 2 are wearable or implantable hearing aids, being associated with the left and right ear of the hearing device user U, respectively.

The hearing device system 1 further comprises a peripheral device 3 being a portable device, e.g. a smartphone, tablet, smartwatch and/or a wireless microphone. In a preferred embodiment, the peripheral device provides a user interface for adjusting hearing device parameters in an intuitive and user-friendly way. For example, a hearing device software, e.g. in form of a mobile app, may be installed on the peripheral device to allow user interaction with the hearing device system 1 via the peripheral device 3.

In other embodiments, exemplary hearing device systems may comprise more or fewer devices. For example, a hearing device system may comprise a single hearing device. In some embodiments, the hearing device system 1 may not comprise a peripheral device, or it may comprise two or more peripheral devices.

The hearing devices 2 are connected to each other in a data transmitting manner via a wireless data connection 4. The wireless data connection may also be referred to as wireless link and may, in particular, be used for binaural audio signal processing. The hearing devices 2 may be further connectable to the peripheral device 3 by wireless data connection 5. Any suitable protocol may be used for establishing the wireless data connections 4, 5. The wireless data connections 4, 5 may be based on the same or different protocols. Exemplary wireless data connections may be by Bluetooth, Bluetooth LE audio or similar protocols, such as, for example, Asha Bluetooth. Further exemplary wireless data connections are DM (digital modulation) transmitters, aptX LL and/or induction transmitters (NFMI). Also other wireless data connection technologies, for example, broadband cellular networks, in particular 5G broadband cellular networks, and /or a local network, in particular a wireless local area network (WLAN,) can be used.

The hearing device system may be connectable to a remote device 6 via a remote data connection 7. The remote device 6 may be a remote server. Via remote device 6, a Cloud service may be established. The remote data connection 7 may preferably be established via the internet, e.g. via WiFi and/or mobile data protocols, such as 3G, 4G and/or 5G broadband cellular networks. The remote data connection 7 may be established between the hearing devices 2 and the remote device 6. Additionally or alternatively, the remote data connection 7 may be established via a peripheral device 3, in particular via a smartphone.

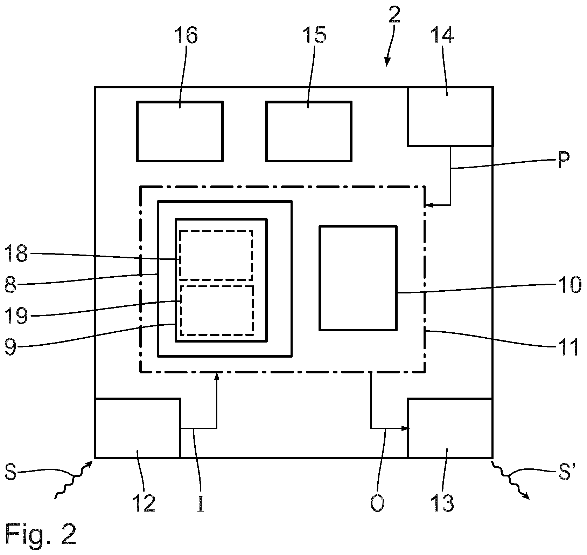

Fig. 2 schematically illustrates a hearing device 2 of the hearing device system 1 in more detail. The hearing device 2 comprises a memory 8 on which hearing device software 9 is stored. Hearing device software 9 comprises instructions to be executed when operating the hearing device. Hearing device 2 further comprises a processor 10, in particular for executing instructions in the hearing device software 9.

The hearing device comprises an audio processing unit 11 for processing audio signals on the hearing device 2. The audio signal processing unit 11 may be seen as a functional unit, which may or may not be associated with specific hardware components. In an embodiment, the memory 8 with the hearing device software 9 and the processor 10 may be part of the audio processing unit 11. For example, the audio signal processing unit 11 may comprise one or more chips, in particular a single chip, comprising the memory 8 and the processor 10. It is also possible that different components may be combined to form the audio processing unit 11.

The hearing device 2 further comprises an audio input unit 12 to obtain an input audio signal I to be processed by the audio processing unit 11 to obtain an output audio signal O. The hearing device 2 further comprises an audio output unit 13 for outputting the output audio signal O.

An audio signal, in particular the input audio signal I and the output audio signal O, may be any electrical signal which carries acoustic information. For example, the input audio signal I may be raw audio data, which is obtained by the audio input unit 12 by receiving the respective ambient sound S. The input audio signal I may further comprise processed audio data, e.g. compressed audio data and/or a spectrum obtained from the ambient sound S. The input audio signal I may contain an omni signal and/or a beam formed audio signal.

In the present embodiment, the audio input unit 12 comprises one or more electroacoustic transducers, especially in the form of one or more microphones. The audio input unit 12 receives ambient sound S and provides a corresponding input audio signal I to the audio processing 11. The audio processing unit 11 performs audio signal processing on the respective input audio signal I, thereby obtaining the output audio signal O. The output audio signal O is provided to the output audio unit 13, which outputs the output audio signal O. In the present embodiment, the output audio unit 13 comprises an electroacoustic transducer, in particular in form of a receiver. The audio output unit 13 provides the corresponding output sound S' to the hearing device user U via the receiver.

It has to be noted that in alternative embodiments, the audio input unit 12 may comprise, in addition to or instead of the microphones, an interface that allows for receiving audio signals, e.g., in the form of an audio stream. For example, an audio stream may be provided to the audio input unit 12 by an external microphone and/or by the peripheral device 3. Furthermore, the audio output unit 13 can comprise, in addition to or instead of the receiver, an interface that allows for outputting electrical audio signals, e.g., in the form of an audio stream or in the form of an electrical signal, that can be used for driving an electrode of a hearing aid implant.

An exemplary audio input unit may further comprise (pre-)processing routines for processing the received ambient sounds S into the input audio signal I. For example, the audio input unit 12 may comprise a beamformer, in particular a binaural beamformer. The audio input unit 12 may comprise pre-processing routines for applying transformations, such as a Fast Fourier Transformation (FFT) and/or a Discreet Cosine Transformation (DCT), window functions, and the like to the received ambient sound S.

The hearing device 2 may further comprise a data interface 14 for receiving and/or sending data via the wireless data connections 4, 5. Data interface 14 may, in particular, be used for providing processing parameters P to the audio processing unit 11 for steering the audio signal processing.

Hearing device 2 may further comprise a controller 15 for controlling the interaction of different hearing device components, in particular for controlling the transmission or reception of data packages to be transmitted between the different components and/or between different devices, in particular of the hearing device system, via the data interface 14.

Hearing device 2 may further comprise a battery 16 for providing electrical power to the hearing device 2 and its components. Battery 16 can be a rechargeable battery and/or a non-rechargeable battery.

The hearing device software 9 comprises a speech enhancement neural network 18. Speech enhancement neural network 18 is configured to be applied to the input audio signal I to enhance the quality, in particular the intelligibility, of speech contained in the input audio signal I. The hearing device software 9 may comprise further software components 19 to be used in the audio signal processing and/or for other tasks to be executed on the hearing device 2, e.g. for pre- and/or postprocessing.

Instructions contained in the hearing device software 9, in particular in the speech enhancement neural network 18, are executed by the processor 10. Processor 10 can be a general purpose processor. Processor 10 can include special-purpose hardware, such as application specific integrated circuits (ASICs), programmable logic devices (PLDs), field-programmable gate arrays (FPGAs), programmable circuitry (e.g. one or more microprocessor microcontrollers), digital signal processor (DSP), appropriately programmed software and/or computer code, or a combination of special purpose hardware and programmable circuitry. In particular, processor 10 may comprise hardware adapted for processing neural networks, e.g. an AI chip. However, a dedicated AI chip is not necessary for executing the speech enhancement neural network 18.

Any suitable data memory can be used for memory 8. Exemplary data memories include, but are not limited to, dynamic random access memories (DRAM), static random access memories (SRAM), random access memories (RAM), solid state drives (SSD), hard drives and/or flash drives.

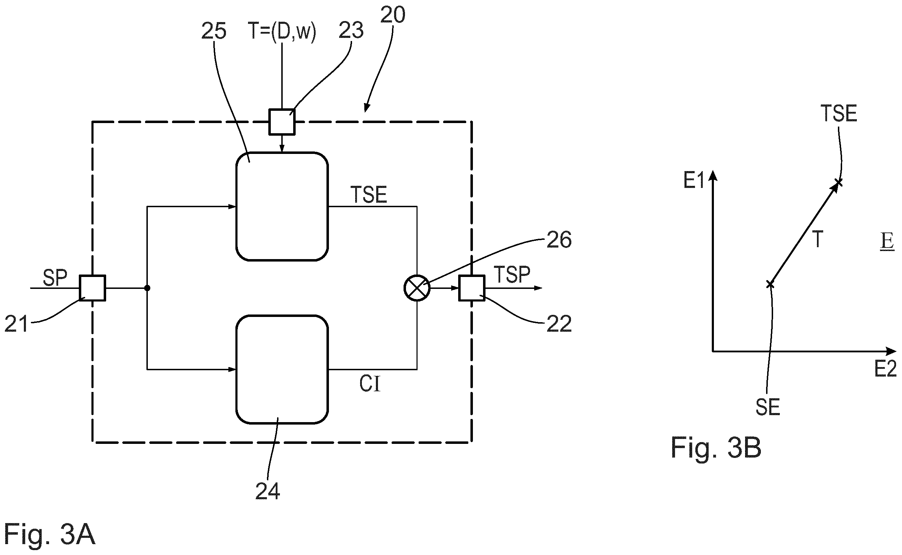

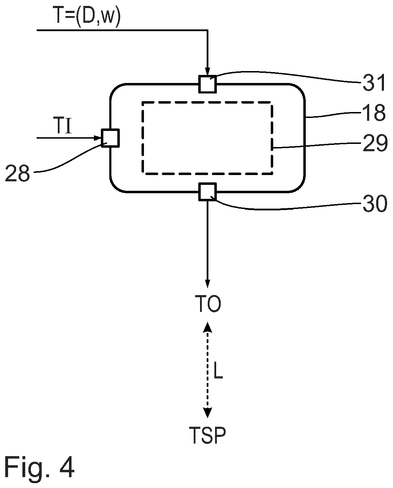

With regard to figures 3A, 3B and 4, a setup and training of the speech enhancement neural network 18 is described in greater detail. Figures 3A and 3B illustrate a speech style transfer algorithm 20 used in the training of the speech enhancement neural network 18. Fig. 4 illustrates the speech style transfer neural network and its training.

The speech style transfer algorithm 20 is used to apply a speech style transfer to a speech sample SP to obtain a target speech sample TSP. The speech style transfer algorithm 20 receives a speech sample SP via a speech sample input 21, performs speech style transformation to the speech sample SP and outputs the target speech sample TSP via a speech sample output 22. In general, any speech style transfer algorithm can be used to apply the speech style transfer to the speech sample SP. In the shown embodiment, the speech style transfer algorithm 20 is a speech style transfer neural network. Exemplary useable networks are Voicebox (cf. M. Le et al. "Voicebox: Text-guided multilingual universal speech generation at scale", arxiv.2306.15687v2, 19.10.2023) and/or AutoVC (cf. K. Qian et al. "AutoVC: Zero-shot voice style transfer with only autoencoder loss", arxiv.1905.05879v2, 06.06.2019). Of course, it is also possible to use a speech style transfer algorithm, which is not based on a neural network.

In the present embodiment, the speech style transfer algorithm 20 is adapted to be particularly suitable for training a speech enhancement neural network of a hearing device. For that purpose, the speech style transfer algorithm 20 comprises a style transfer input 23 for receiving a style shift parameter T. The speech style transfer algorithm 20 is configured to determine the speech style of the target speech sample TSP relative to the speech style of the provided speech sample SP in accordance with the style shift parameter T. For that purpose, the speech style transfer algorithm 20 comprises a content processing block 24 and a style processing block 25. The content processing block 24 takes the inputted speech sample SP and obtains sample content information CI on a content of the speech sample SP. For example, the content processing block 24 may calculate a content embedding of the speech sample SP. Content information CI resembles the content of the speech sample irrespective of a speech style. Content information CI may, for example, be in form of a transcript. Instead of obtaining the content information CI via a content processing block 24, content information CI may also be provided to the speech style transfer algorithm via separate input, e.g. in form of a transcript.

Style processing block 25 extracts style features from the speech sample SP. Style processing block 25 calculates a sample style embedding SE of the speech sample SP. A sample style embedding SE is a vector representation of the speech style of the speech sample SP in a style embedding space E. Style embedding space E may be a multidimensional vector space, in which different speech styles are identified by respective embedding vectors. A transfer of the speech style can thus be represented by shifting a sample style embedding vector in the style embedding space E. Fig. 3B schematically illustrates the style embedding space E with two dimensions E1, E2. In general, the style embedding space E may be of higher dimension, in order to incorporate significant information on the respective speech style. The sample style embedding SE of the speech sample SP is indicated as a point in the style embedding space E.

Preferably, the style embedding space E is configured with maximized information content. The style embedding space E is in particular configured such that the distance between embeddings of similar speech styles is minimized, whereas the distance between embeddings of different speech styles is maximized. In particular, different regions in the style embedding space E are associated with different classes of speech styles, so that a style transfer towards a specific kind of speech style is associated with a specific direction in the style embedding space E.

Based on the determined sample style embedding SE, the style processing block 25 determines a target style embedding TSE by shifting the sample style embedding SE by the style shift parameter T. In the present embodiment, the style shift parameter T is in form of a vector in the style embedding space E, so that the target style embedding TSE is determined by: TSE = SE + T. This allows for a relative shift of the speech style based on the speech style of the given speech sample SP.

The kind of speech style transfer is in particular determined by style shift direction D and a style shift strength w of the style parameter T. The style shift direction D can be a unit vector in the embedding space. The style shift strength w can be a scalar determining the length of the resulting style shift parameter T. As such, the style shift parameter T can be determined: T = w D.

The content information CI and the target style embedding TSE are provided to a generating block 26, which generates a target speech sample containing the content of the speech sample SP, which is reproduced in a speech style in accordance with the target speech embedding TSE.

In particularly preferable embodiments, the speech style transfer algorithm 20 is a speech style transfer neural network. The speech style transfer neural network can, for example, be based on AutoVC, which is described in K. Qian et al. "AutoVC: Zero-shot voice style transfer with only autoencoder loss", (arxiv. 1905.05879v2), which is incorporated herein in its entirety by reference. In particular, the architecture of the speech style transfer neural network can coincide with the architecture of Auto VC as described with reference to Fig. 3 in the referenced article. As such, the content processing block 24 of the speech style transfer neural network 20 may correspond to the content encoder E_{c} of AutoVC and the style processing block 25 may correspond to the speaker encoder Eₛ of AutoVC (cf. Fig. 1 of the referenced article). The generator block 26 may correspond to the decoder C of AutoVC. While AutoVC applies the content encoder E_{c} to a first speech sample to obtain its content and applies the speaker encoder Eₛ to the second speech sample to obtain its speech style, the speech style transfer neural network 20 can be configured to apply the content processing block 24 and the style processing block 25 to the same speech sample SP, but to shift the resulting style embedding SE by a style shift parameter T. Instead of providing a second speech sample to define the speech style of the outputted target speech sample TSE, the speech style can be shifted relatively from that of the speech sample SP, allowing for a greater flexibility in the style transfer. In particular, a relative style transfer ensures that different speech styles of different speakers are resulting in target speech sample which correspondingly differ in speech style, so that these different speakers can still be distinguished.

Fig. 4 schematically depicts the speech enhancement neural network 18 and a training routine therefor. The speech enhancement neural network 18 comprises a network audio input 28 for receiving an audio signal, one or more network layers 29 for predicting an enhanced audio signal and a network output 30 for outputting the enhanced audio signal. During inference, the speech enhancement neural network 18 may receive the input audio signal I via the network audio input 28 and return an enhanced audio signal, being the input audio signal with improved intelligibility of speech contained in the input audio signal. The returned enhanced audio signal may be directly used as output audio signal O or undergo further processing to obtain the output audio signal O.

The speech enhancement neural network 18 further comprises a network parameter input 31 for receiving the style shift parameter T. The network parameter input 31 is preferably configured to receive and set the style shift direction D and the style shift strength w independently of each other. This improves the flexibility in steering the network operation of the speech enhance neural network 18, in particular via user inputs of the hearing device user U, as will be explained in greater detail below.

In the following, a method for training the speech enhancement neural network 18 is described.

The speech enhancement neural network 18 is provided, having the network audio input 28, the one or more network layers 29, the network output 30 and, preferably, the network parameter input 31.

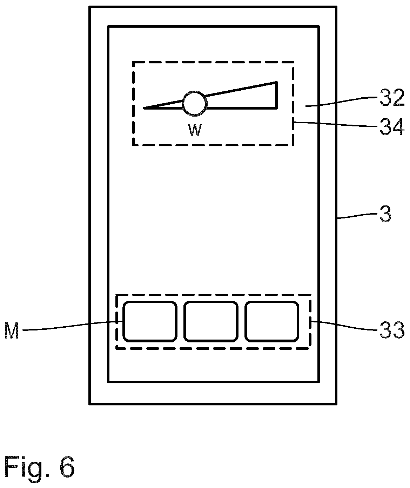

Any suitable neural network architecture, in particular any suitable arrangement of the one or more network layers 29, which allows for speech enhancement, e.g. by noise cancellation and/or output audio signal generation, and which is executable on a hearing device, in particular a hearing aid, may be used for the speech enhancement neural network 18. For example, the speech enhancement neural network 18 may comprise a so-called "Minsky" network architecture. A particularly suitable neural network structure for the speech enhancement neural network 18 is described in applicant's patent application EP 23 163 893.3, filed on March 24, 2023, and which is incorporated herein in its entirety by reference. With regard to the structure of the speech enhancement neural network 18, reference is in particular made to Fig. 6 and the corresponding description of EP 23 163 893.3.

The processing unit 11, in particular processor 10, of hearing device 2 may preferably comprise a processing chip as described in EP 23 163 893.3 for executing the speech enhancement neural network 18.

A particularly suitable network architecture for the speech enhancement neural network 18 and hearing device hardware are also described in S. Park, S. Lee, J. Park, H.-S. Choi, and D. Jeon, "A 0.81 mm2 740 µW real-time speech enhancement processor using multiplier-less PE arrays for hearing aids in 28 nm CMOS," in IEEE Int. Solid-State Circuits Conf. (ISSCC) Dig. Tech. Papers, Feb. 2023, pp. 340-342, which is incorporated herein in its entirety by reference. The hearing device 2, in particular the processing unit 11, may comprise a speech enhancement processor as described in this article.

A speech style transfer algorithm, in particular a speech style transfer neural network, is provided. The speech style transfer algorithm may be configured as described with regard to figures 3A and 3B.

Training data comprising at least one training data set is obtained. Each training data set comprises a training input audio signal TI comprising a mixture of a speech sample SP with noise N. In other words, the training input audio signal comprises a noisy speech sample NSP, wherein NSP = SP + N.

Each training data set further comprises a target speech sample TSP, which is obtained by applying the provided speech style transfer algorithm 20 on the speech sample SP.

Preferably, the training data set further comprises the style shift parameter T, which steers the speech style transfer applied to obtain the target speech sample TSP from the speech sample SP.

Each training data set may hence comprise the following data components: a noisy speech sample NSP, a style shift parameter T, in particular a style shift direction D and/or a style shift strength w, and a target speech sample TSP.

It is possible to provide a speech sample SP, which is afterwards combined with noise N from one or more noise sources or noise samples. This way, the clean speech sample SP can be provided to the speech style transfer algorithm 20 to obtain the target speech sample TSP in dependence of the style shift parameter T. It is also possible to provide noisy speech samples NSP, in particular samples, which inherently comprise a combination of speech and noise and which can be directly used as the noisy speech sample NSP. In this case, the noisy speech sample NSP can be denoised to obtain the speech sample SP to be inputted in the speech style transfer algorithm 20. Noise reduction or denoising can be obtained by various methods known to the skilled person. In particular, an enhancement neural network for denoising audio signals may be applied to the noisy speech sample NSP.

The at least one training data set is used in supervised training of the speech enhancement neural network 18 as shown in Fig. 4. The training input audio signal TI is provided to the speech enhancement neural network 18 via the network audio input 28. The style shift parameter T is applied to the network parameter input 31. The speech enhancement neural network 18 predicts a training output TO being an enhanced audio signal. The target speech sample TSP is used as training target. The target speech sample TSP enters the loss function L to calculate the loss to be backpropagated in the supervised training.

The loss function L may, for example, be a reconstruction loss and/or a style consistency loss. A reconstruction loss may penalize the distance between the training TO output and the target speech sample TSP, e.g. cIRM, SDR, ESTOI and/or deep feature losses. A reconstruction loss may penalize the distance between the target output TO and the target speech sample TSP in a style space, in particular in the style embedding space E.

The supervised training is preferably repeated for a multitude of training data sets. In particular, different training data sets may be used, which differ in the style shift parameter T, in particular in the style shift direction D and/or the style shift strength w. This way, the speech enhancement neural network 18 is trained to predict an enhanced audio signal which comprises speech with less noise, preferably no noise, and in different speech styles, in particular in a speech style which is better understandable for the hearing device user U, in particular depending on the preferences and/or a hearing deficiency, e.g. a hearing loss, of the hearing device user U.

Preferably, during training, the style shift parameter T, in particular the style shift direction D and/or the style shift strength w, are sampled according to a distribution function. The distribution function can preferably be chosen to reflect particularly useful style shift parameters T, in particular style shift directions D and/or style shift weights w.

The supervised training of the speech enhancement neural network 18, in particular the execution of the speech style transfer algorithm 20, preferably the speech style transfer neural network, can be performed on the remote device 6, in particular on a remote server. This allows to perform hardware extensive operations such as speech style transfer using the speech style transfer algorithm, in particular the speech style transfer neural network 20.

The training method in particular enables a speech enhancement neural network 18 to perform speech style transfer despite its lower computational needs. This enables speech style transfer to be applied directly on the hearing device 2. The speech style transfer capability of the speech style transfer algorithm 20 can be at least partly implemented in the speech enhancement neural network 18 by using the output of the speech style transfer algorithm 20 as training target.

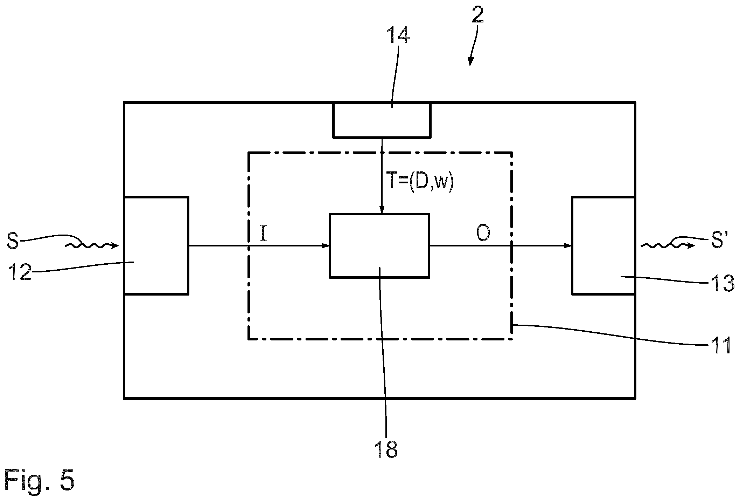

Fig. 5 schematically shows a method for audio signal processing on the hearing device 2, using a speech enhancement neural network 18 in inference mode. An ambient sound S containing speech is received by the audio input unit 12 and an input audio signal I is obtained. The input audio signal I is processed by the audio processing unit 11 to obtain an output audio signal O. Determining the output audio signal O comprises applying the speech enhancement neural network 18 on the input audio signal I. The input audio signal I is inputted to the speech enhancement neural network 18. The speech enhancement neural network 18 predicts the output audio signal O. The speech enhancement neural network 18 of the present embodiment is a generative neural network, which generates and outputs the output audio signal O. The output audio signal O is outputted as modified sound S' using the audio output unit 13.

The speech enhancement neural network 18 processes the input audio signal I, thereby performing speech style transfer on speech contained in the input audio signal I, in real-time, in particular causing a latency of shorter than 25 ms, preferably shorter than 20 ms, between signal input and signal output.

The style shift parameter T, in particular the style shift direction and the style shift strength w, are provided to the speech enhancement neural network 18 to steer the speech style transfer to be applied to the input audio signal.

There are multiple possible ways to set the style shift parameter T, in particular the style shift direction D and/or the style shift strength w. In the embodiment shown in Fig. 5, the style shift parameter T, in particular the style shift direction D and/or the style shift strength w, can be received by the hearing device 2 as processing parameters via the data interface 14. The style shift parameter T, in particular the style shift direction D and/or the style shift strength w, can, for example, be defined by the hearing device user U or a hearing care professional, for example via a user interface, in particular via a user interface of a peripheral device 3, and transmitted to the hearing device 2.

In the following, different ways to set the style shift parameter T, in particular the style shift direction D and/or the style shift strength w, are described.

One possibility of setting the style shift parameter T is described with regard to figure 6. Figure 6 shows an exemplary remote device 3 in form of a mobile compute device, in particular a smartphone, of a hearing device user U. The remote device 3 comprises a hearing device system software which allows to set processing parameters P for audio signal processing on the one or more hearing devices 2 of a hearing device system 1. Remote device 3 comprises a user interface 32, in the shown example in the form of a touchscreen.

As shown in Fig. 6, the hearing device system software may offer different ways for manipulating the style shift parameter T by a hearing device user U using the user interface 32.

In a style shift mode selection interface 33, the hearing device user U can choose from two or more different discreet style shift modes M. The style shift modes M may be presented to the hearing device user U as a selection menu for selecting one or more of the style shift modes. In Fig. 6, exemplary three different style shift modes M are shown in the style shift mode selection interface 33. The style shift mode selection interface 33 may include more or less style shift modes M, being selectable by the user. Exemplary style shift modes M may include, but are not limited to "remove stuttering", "raise vocal effort" and/or "lower pitch". The style shift mode selection interface 33 allows for an easy and user-friendly selection of the appropriate style shift mode M in accordance with the present hearing situation, the preferences of the hearing device user U and/or the hearing deficiency, in particular the hearing loss, of the hearing device user U.

Additionally or alternatively to the style shift mode selection interface 33, the hearing device system software may comprise a style shift strength selection interface 34 for setting the style shift strength w. The style shift strength w can be set in steps and/or continuously. The stronger the style shift strength w is chosen, the more impact the style transfer has on the speech style of the conversation partner. Using the style shift strength selection interface 34, the hearing device user U can balance the style transfer applied to the input audio signal I with regard to clarity and naturalness of the outputted speech style. The higher the style shift strength w is chosen, the clearer, but the less natural, the outputted speech style may be.

The style shift strength selection interface 34 can preferably be combined with the style shift mode selection interface 33 for manipulating the style shift strength w for any of the different selectable style shift modes M.

The different style shift modes M may be regarded as different style shift directions, which can be chosen from a preset selection. It may also be possible that the hearing device user U may continuously vary the style shift direction. However, due to the multidimensional structure of possible style transfers, in particular the multidimensional style embedding space E, a continuous selection of the style shift direction D may be cumbersome and confusing to the hearing device user U. To lower the effort for the hearing device user U, the hearing device system software may allow to the style shift direction D by applying one or more consecutive A/B testing to the hearing device user U.

In a further embodiment, the style shift parameter T, in particular the style shift direction D and/or the style shift weight w, may be adjusted during hearing device fitting, in particular by a hearing care professional (HCP). The hearing care professional can, based on the preferences and/or a hearing deficiency, in particular hearing loss, of the hearing device user U, set appropriate style shift parameters T, in particular an appropriate style shift direction D and/or an appropriate style shift strength w. For example, the hearing care professional may apply A/B testing for choosing the appropriate style shift parameter T.

In a particularly preferred embodiment, the style shift direction D may be set during hearing device fitting by a hearing care professional, for example by A/B testing. This allows in particular to apply a continuous style selection using the experience of the hearing care professional. Once appropriately set, the style shift direction D can be fixed on the hearing device 2. The hearing device user U, may however, adjust the style shift strength w to his or her present preferences and/or needs. For example, the style shift strength w may be set by a style shift strength selection interface 34 in an appropriate hearing device system software.

In instances, where the style shift direction D is to be kept fixed after hearing device fitting, it is possible to particularly train the speech enhancement neural network 18 with a fixed style shift direction D. The speech enhancement neural network 18 is then not required to perform speech style transfer with other style shift directions D, which may allow to reduce the complexity of the speech enhancement neural network 18. The speech enhancement neural network 18 may be specifically trained for the needs of the respective hearing device user U.

The style shift parameter T, in particular the style shift direction D and/or the style shift strength w, may also be set to one or more default values. For example, an appropriate style shift parameter T, which improves speech intelligibility, can be chosen and fixedly implemented in the hearing device. The style shift parameter T may be kept constant during operation of the speech enhancement neural network 18. In such cases, it is also possible to train the speech enhancement neural network 18 only based on this particular style shift parameter T. It is in particular possible to set up the speech enhancement neural network 18 without a network parameter input 31. The speech enhancement neural network 18 may only be trained for a single style transfer to be applied to the input audio signals I. This allows to reduce the complexity of the speech enhancement neural network even further, which reduces its hardware needs.

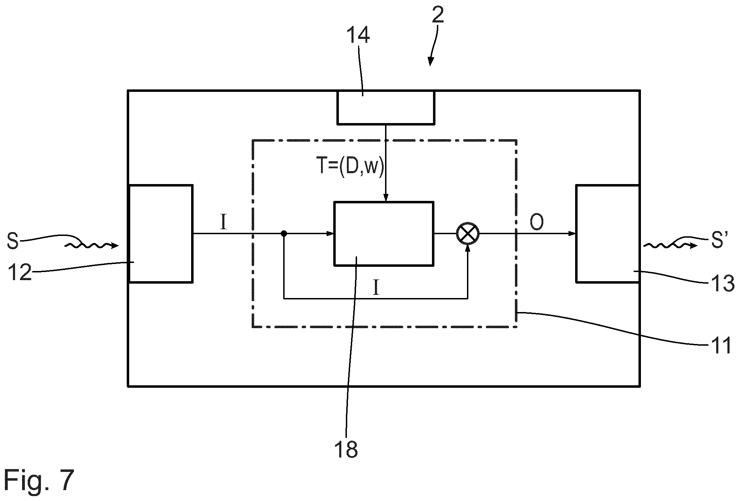

Fig. 7 shows a further embodiment for audio signal processing on a hearing device 2. The method of Fig. 7 differs from that of Fig. 5 in that the speech enhancement neural network 18 is trained to predict a filter mask F based on the input audio signal I and the style shift parameter T. The filter mask F is applied to the input audio signal I to obtain the output audio signal O. For this purpose, the input audio signal I may be duplicated and the duplicated input audio signal I may bypass the speech enhancement neural network 18. The processing unit 11 may comprise a delay compensation unit in the signal path of the duplicated input audio signal I to compensate delays caused by the speech enhancement neural network.

In training the speech enhancement neural network 18, the predicted training output is a training filter mask, which may be applied to the noisy speech sample NSP to obtain the training output audio signal, which can be compared with the target speech sample TSP in the loss function L.

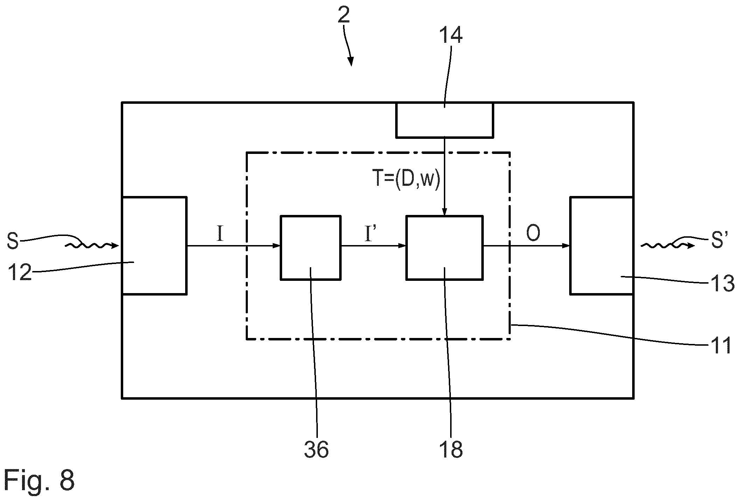

With regard to Fig. 8, a further embodiment of audio signal processing on a hearing device 2 using a speech enhancement neural network 18 is described. In the audio signal processing of Fig. 8, the input audio signal I obtained by the audio input unit 12 is provided to a noise reduction algorithm 36. The noise reduction algorithm 36 removes noise from the input audio signal I and outputs a denoised audio signal I'. Denoised audio signal I' is provided to the speech enhancement neural network 18, which performs a speech style transfer on the denoised audio signal I'. The method of Fig. 8, thus, provides for a functional separation of noise reduction and speech style transfer. This way, the speech enhancement neural network 18 only has to take care of the speech style transfer. This allows to reduce the complexity of the speech enhancement neural network 18 and its training. For example, the speech enhancement neural network 18 may be trained with training data comprising the speech sample SP as training audio input. A combination with noise is not needed.

The noise reduction algorithm 36 may be any suitable noise reduction algorithm. The noise reduction algorithm 36 may comprise a neural network for noise reduction.

In further embodiments, further pre- and/or post-processing steps may be applied before and after the speech enhancement neural network.

In the above embodiments, the speech enhancement neural network 18 outputs the output audio signal O. In that sense, the enhanced audio signal obtained by the speech enhancement neural network 18 is directly used as the output audio signal O. It is also possible that an outputted enhanced audio signal undergoes further processing to obtain the output audio signal O.

In the above embodiments, the style shift transfer is characterized by a style shift in a style embedding space. In other embodiments, different ways to characterize the style shift transfer may be used. For example, the style shift transfer may be characterized by providing a speech sample, whose speech style should be achieved by the style shift transfer. It is also possible to characterize the style shift transfer by natural language. In general, any kind of speech style transfer and/or characterization of the speech style transfer, may be implemented in the speech enhancement neural network.

## Claims

1. Method for training a speech enhancement neural network for being executed on a hearing device, comprising the steps:
- providing a speech enhancement neural network (18) having
- - a network audio input (28) for receiving an input audio signal (I),
- - one or more network layers (29) for predicting, based on the input audio signal (I), an enhanced audio signal and/or a filter mask (F) for filtering the input audio signal (I), and
- - a network output (30) for outputting the enhanced audio signal and/or the filter mask (F),
- providing a speech style transfer algorithm (20), in particular a speech style transfer neural network, for converting speech samples with a first speech style into speech samples with a second speech style,
- obtaining at least one training dataset, each training dataset comprising
- - a training input audio signal (TI) comprising a speech sample (SP), and
- - a target speech sample (TSP), wherein the target speech sample (TSP) is obtained by applying the speech style transfer algorithm (20) on the respective speech sample (SP), and
- applying supervised training on the speech enhancement neural network (18) using the at least one training dataset.

2. Method according to claim 1, wherein the training input audio signal (TI) comprises a mixture of the respective speech sample (SP) with noise (N).

3. Method according to claim 1 or 2, wherein a style shift parameter (T) is provided to the speech style transfer algorithm (20) and wherein the speech style transfer algorithm (20) determines the second speech style relatively to the first speech style in accordance with the style shift parameter (T).

4. Method according to claim 1 to 3, wherein obtaining the target speech sample (TSP) using the speech style transfer algorithm (20) comprises
- obtaining sample content information (CI) on the speech sample (SP),
- determining a sample style embedding (SE) of the speech sample (SP) within a style embedding space (E),
- determining a target style embedding (TSE) by shifting the sample style embedding (SE) by a style shift parameter (T), and
- generating the target speech sample (TSP) based on the sample content information (CI) and the target style embedding (TSE).

5. Method according to claim 3 or 4, wherein the speech enhancement neural network (18) comprises a network parameter input (31) for the style shift parameter (T), in particular a style shift direction (D) and/or a style shift strength (w), and training is performed using a plurality of training datasets comprising different style shift parameters (T).

6. Speech enhancement neural network for being executed on a hearing device, wherein the speech enhancement neural network comprises
- a network audio input (28) for receiving an input audio signal (I),
- one or more network layers (29) for predicting, based on the input audio signal (I), an enhanced audio signal and/or a filter mask (F) for filtering the input audio signal (I), and
- a network output (30) for outputting the enhanced audio signal and/or the filter mask (F),
wherein the speech enhancement neural network (18) is configured to apply a speech style transfer on speech contained in the input audio signal (I), wherein the speech enhancement neural network (18) is preferably trained according to any one of claims 1 to 5.

7. Speech enhancement neural network according to claim 6, comprising a network parameter input (31) for receiving a style shift parameter (T), in particular a style shift direction (D) and/or a style shift strength (w), for steering a speech style transfer to be applied to the input audio signal (I).

8. Speech enhancement neural network according to claim 6 or 7,
wherein the speech enhancement neural network (18) is configured to process the input audio signal (I) in real-time.

9. Hearing device, comprising
- an audio input unit (12) for obtaining an input audio signal (I),
- an audio processing unit (11) for processing the input audio signal (I) for obtaining an output audio signal (O), and
- an audio output unit (13) for outputting an output audio signal (O), wherein the audio processing unit (11) comprises a speech enhancement neural network (18) according to any one of the claims 6 to 8 to be applied on the input audio signal (I) for obtaining the output audio signal (O).

10. Hearing device according to claim 9, wherein the speech enhancement neural network (18) is configured to execute speech style transfer based a style shift parameter (T), in particular a style shift direction (D) and/or a style shift strength (w), wherein the style shift parameter (T), in particular the style shift direction and/or style shift strength, is preferably adjusted based on preferences and/or a hearing deficiency of the hearing device user.

11. Method of audio signal processing on a hearing device according to claim 9 or 10, comprising the steps:
- obtaining an input audio signal (I) using the audio input unit (12),
- determining an output audio signal (O) based on the input audio signal (I) using the audio processing unit (11), wherein determining the output audio signal (O) comprises applying the speech enhancement neural network (18) on the input audio signal (I), and
- outputting the output audio signal (O) using the audio output unit (13).

12. Method according to claim 11, wherein a style shift parameter (T), in particular a style shift direction (D) and/or a style shift strength (w), is provided to the speech enhancement neural network (18) for steering a speech style transfer to be applied to the input audio signal (I).

13. Method according to claim 12, wherein providing the style shift parameter (T) comprises choosing at least one style shift parameter (T) of a set of predefined style shift parameters (T).

14. Method according to any one of claims 12 to 13, wherein providing the style shift parameter (T) comprises adjusting the style shift direction (D) and/or a style shift strength (w), during a hearing device fitting session, in particular by A/B testing.

15. Method according to any one of claims 12 to 14, wherein providing the style shift parameter (T) comprises adjusting a style shift strength (w) based on a style shift direction (D) adjusted in accordance with preferences and/or a hearing deficiency of the hearing device user (U).
